(19) Europäisches Patentamt
European Patent Office
Office européen des brevets

(11) **EP 3 535 491 B1**

(12) **FASCICULE DE BREVET EUROPEEN**

(45) Date de publication et mention
de la délivrance du brevet:
**15.02.2023 Bulletin 2023/07**

(21) Numéro de dépôt: **17804623.1**

(22) Date de dépôt: **07.11.2017**

(51) Classification Internationale des Brevets (IPC):
***F03D 17/00*** *(2016.01)*

(52) Classification Coopérative des Brevets (CPC):
**F03D 17/00;** F05B 2270/334

(86) Numéro de dépôt international:
**PCT/FR2017/053030**

(87) Numéro de publication internationale:
**WO 2018/083430 (11.05.2018 Gazette 2018/19)**

(54) **PROCÉDÉ DE DÉTECTION DE LA DÉFAILLANCE D'UN ÉLÉMENT MOBILE D'UN AÉROGÉNÉRATEUR**

VERFAHREN ZUM ERKENNEN DES AUSFALLS EINER BEWEGLICHEN KOMPONENTE EINER WINDTURBINE

METHOD FOR DETECTING THE FAILURE OF A MOVING COMPONENT OF A WIND TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2016 FR 1660722**

(43) Date de publication de la demande:
**11.09.2019 Bulletin 2019/37**

(73) Titulaire: **Engie Green France
92400 Courbevoie (FR)**

(72) Inventeurs:
• **ANDRE, Hugo**
**69001 Lyon (FR)**
• **LEFEBVRE, Colin**
**51320 Coole (FR)**

(74) Mandataire: **Germain Maureau**
**12, rue Boileau**
**69006 Lyon (FR)**

(56) Documents cités:
**EP-A1- 2 626 683    EP-A2- 1 612 458
EP-A2- 2 169 224    CN-A- 104 849 037**

**Description**

**Domaine de l'invention**

Le domaine de la présente invention concerne celui des procédés de détection de la défaillance d'un élément mobile d'un aérogénérateur.

**Art antérieur**

Depuis plusieurs décennies, des solutions sont proposées pour améliorer la détection de défaillance des éléments constitutifs d'une ligne d'arbre d'une machine tournante.

Certaines techniques d'analyses, bien connues de l'homme du métier, comme par exemple l'analyse du lubrifiant ou bien le suivi de température, semblent limitées et ne détectent le défaut qu'une fois survenu, comme c'est le cas du suivi de température, ou sont difficiles à mettre en oeuvre, comme dans le cas de l'analyse de lubrifiant.

D'autres techniques mettent en oeuvre une analyse vibratoire. A titre d'exemple, les techniques définissant des indicateurs globaux du type « rms » ou « kurtosis » ne permettent que de détecter les défaillances graves. Il est également commun d'utiliser des indicateurs vectoriels pour suivre l'évolution du signal. En particulier, l'observation du signal vibratoire revient à calculer un spectre ou éventuellement un spectre d'enveloppe, puis à mesurer l'amplitude des canaux fréquentiels de chacune des fréquences qui constituent la famille d'harmonique caractéristique du mode de défaillance sous surveillance. A titre d'exemple, suivre un défaut de bague externe revient à suivre les 3 premières harmoniques de la fréquence caractéristique de bague externe du roulement sur le spectre. Néanmoins, dans le cas d'un défaut faiblement énergétique comme par exemple, un roulement lent, il faut augmenter la résolution fréquentielle pour espérer différentier l'amplitude du canal fréquentiel du bruit ambiant. Ceci impose de connaître la fréquence caractéristique avec une précision suffisante, car l'augmentation de la résolution fréquentielle peut faire apparaître des composantes dites fantômes en plus de la composante recherchée. Toutefois, cette précision de connaissance de la fréquence caractéristique ne peut être atteinte, car la fréquence caractéristique présente une variabilité. En effet, cette fréquence caractéristique dépend de l'angle de contact dans le roulement qui lui-même dépend des conditions de fonctionnement appliqué au roulement.

Ainsi, il n'existe pas de procédé fournissant un indicateur fiable qui puisse permettre l'évaluation et la surveillance d'un état de roulement à partir d'une analyse de signal vibratoire.

En particulier, il n'existe par de procédé de détection efficace pour les lignes d'arbre lentes et des défauts peu énergétiques. Dans le cas des défaillances de roulement principal d'éolienne, les roulements tournent à faible vitesse, c'est-à-dire une vitesse de l'ordre de quelques dizaines de tours par minutes, par exemple 20 tours par minutes. Notamment, les procédé existants ne sont pas adaptés à la détection de défaut de cage, d'éléments roulants, de bague externe ou de bague interne de roulement, et de façon plus générale aux défauts se manifestant sous forme de famille d'harmoniques dans un spectre.

Un exemple de l'art antérieur est divulgué dans le document EP1612458A2.

**Exposé de l'invention**

La présente invention a pour but de résoudre tout ou partie des inconvénients mentionnés ci-dessus sous la forme d'un procédé de détection de la défaillance d'un élément mobile d'un aérogénérateur, le procédé de détection comprend les étapes suivantes :

- mesure d'une grandeur physique représentative du mouvement de l'élément mobile de l'aérogénérateur de sorte à générer un signal mesuré temporel ;
- transformation du signal mesuré temporel ou d'un signal temporel obtenu à partir du signal mesuré temporel de sorte à générer un signal fréquentiel présentant un premier spectre ;
- calcul d'un spectre transformé dont la valeur pour une fréquence donnée correspond au produit de la valeur du premier spectre ou d'un spectre obtenu à partir du premier spectre et d'un ensemble de valeurs du premier spectre ou du spectre obtenu à partir du premier spectre correspondant à des multiples de la fréquence donnée.
- vérification de la réalisation d'un critère de détection pour des valeurs du spectre transformé dans un intervalle fréquentiel à proximité d'une valeur caractéristique d'un défaut.

Ainsi, grâce à cette disposition, il est possible de détecter l'état de l'élément mobile de l'aérogénérateur lorsque l'élément mobile de l'aérogénérateur est défaillant, la défaillance se manifestant par une vibration de faible énergie.

Selon un aspect de l'invention, la valeur caractéristique d'un défaut correspond à une fréquence caractéristique d'un défaut à détecter.

Selon un aspect de l'invention, l'étape de calcul d'un spectre transformé prend en compte un nombre de multiples de la fréquence donnée correspondant à un nombre d'harmoniques d'une fréquence caractéristique du défaut à détecter.

Selon un mode de réalisation, le procédé de détection comprend une étape de décalage fréquentiel résultant en un spectre dont la valeur pour une fréquence donnée correspond au produit de la valeur du premier spectre ou d'un spectre obtenu à partir du premier spectre et d'un ensemble de valeurs du premier spectre ou d'un spectre obtenu à partir du premier spectre correspondant à la somme de la fréquence donnée et d'un multiple de la fréquence caractéristique de l'élément mobile de l'aérogénérateur.

Selon un aspect de l'invention, la fréquence caractéristique de l'élément mobile est la fréquence de rotation de l'arbre sur lequel la bague est fixée dans le cas de la détection d'une défaillance d'une bague interne tournante.

Selon un mode de réalisation, le signal fréquentiel est généré en appliquant au signal mesuré temporel une transformée de fourrier.

Selon un mode de réalisation, le procédé de détection comprend une étape d'amélioration de la qualité du signal mesuré temporel de façon à augmenter la résolution fréquentielle par un facteur au moins égal au nombre de multiples.

Selon un mode de réalisation, l'étape d'amélioration comprend une étape d'interpolation du spectre

Selon un mode de réalisation, l'étape d'interpolation est réalisée par ajout de valeurs correspondant à une valeur nulle ou à une valeur moyenne à l'extrémité du signal mesuré temporel pour l'ensemble de valeurs de façon à multiplier la longueur du signal mesuré temporel par le facteur au moins égal au nombre de multiples.

Selon un mode de réalisation, le procédé comprend une étape de nettoyage du spectre dans laquelle au moins une valeur du spectre correspondant à au moins une fréquence parasite est remplacée par une valeur de lissage.

Selon un mode de réalisation, la valeur de lissage correspond à la valeur minimale du spectre ou à une valeur nulle.

Ainsi, grâce à cette disposition, il est possible de conserver seulement les harmoniques nécessaires à la détection de la défaillance de l'état de l'élément mobile de l'aérogénérateur.

Selon un aspect de l'invention, l'étape de nettoyage du spectre est réalisée préalablement à l'étape de décalage fréquentiel.

D'autres caractéristiques et avantages de l'invention apparaîtront mieux à la lecture de la description qui suit d'un mode de réalisation de l'invention donné à titre d'exemple non limitatif.

## Liste des figures

L'invention sera mieux comprise à l'aide de la description détaillée qui est exposée ci-dessous en regard du dessin, dans lesquels :

- la figure 1 représente un exemple de mesure d'une grandeur physique représentative du mouvement de l'élément mobile de l'aérogénérateur ;

- la figure 2 montre une étape d'amélioration de la qualité du signal mesuré temporel ;

- la figure 3 illustre un exemple de transformation du signal mesuré temporel ;

- la figure 4 expose un exemple de spectre nettoyé ;

- la figure 5 présente un exemple de décalage fréquentiel selon l'invention correspondant à moins $2f_1$ ;

- la figure 6 représente un exemple de décalage fréquentiel selon l'invention correspondant à moins $f_1$ ;

- la figure 7 illustre un exemple de décalage fréquentiel selon l'invention correspondant à plus $f_1$

- la figure 8 illustre un exemple de décalage fréquentiel selon l'invention correspondant à plus $2f_1$

- la figure 9 expose un exemple de produit de la valeur du premier spectre et d'un ensemble de valeurs du premier spectre ;

- la figure 10 présente un exemple de transformation par produit d'harmonique ; et

- la figure 11 présente un système mettant en oeuvre le procédé selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

## Description d'un mode réalisation de l'invention

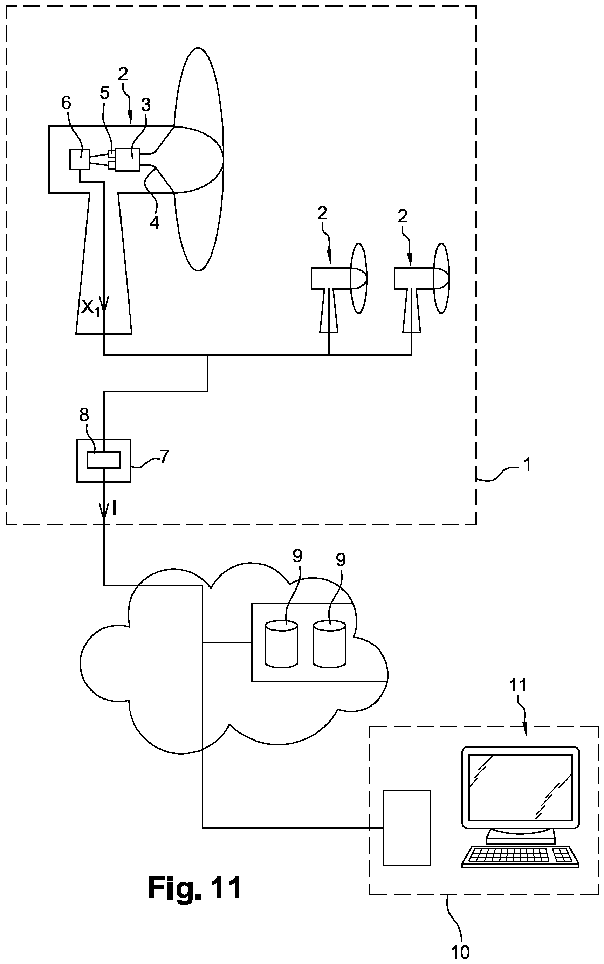

La figure 11 représente un système équipant un parc éolien et comprenant un ensemble d'aérogénérateurs 2.

Un aérogénérateur comprend un ensemble électromécanique 3 comprenant notamment un élément mobile en rotation 4.

L'ensemble électromécanique est équipé d'au moins un capteur 5 relié à un circuit d'acquisition 6. Le circuit d'acquisition produit un signal temporel mesuré $x_1$. Les signaux temporels mesurés peuvent être collectés au niveau d'un poste de livraison 7 comprenant par exemple un serveur de calcul 8 muni d'au moins un processeur programmé pour transformer le signal et déterminer des indicateurs I, dont la nature sera décrite ultérieurement.

Ces indicateurs I peuvent être communiqués à un serveur distant, notamment à un serveur de données accessible par Internet en vue d'un stockage de l'intégralité des indicateurs, afin par exemple de mettre à disposition ces indicateurs pour des interrogations par les exploitants.

Ces indicateurs I sont également transmis à un centre de supervision 10 comprenant également un ou plusieurs terminaux 11 munis d'au moins un processeur agencé pour communiquer des informations d'historique à un utilisateur, mais également pour permettre la surveillance et le réglage de seuils ou de critères de détection, et pour déclencher des alarmes.

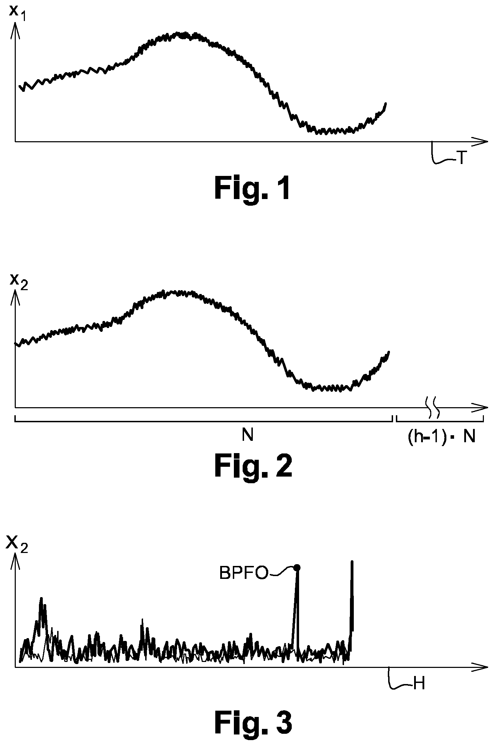

Le signal $x_1$, représenté à la figure 1, est obtenu à partir d'un capteur 5 et du circuit d'acquisition 6 en fonction du temps T. Le signal $x_1$ peut être notamment un signal échantillonné obtenu à partir d'un capteur vibratoire, notamment d'un capteur électrique, et notamment d'un capteur de vitesse. Ce signal peut être échantillonné en temps avec une fréquence fs d'acquisition du signal temporel, ou en angle, avec une résolution du signal angulaire R. Le signal $x_1$ peut être représente par un vecteur $x_1[n]$ de taille $N$.

Ce signal est soumis au procédé de détection de la défaillance de l'élément mobile de l'aérogénérateur. Le procédé de détection mesure une grandeur physique représentative du mouvement de l'élément mobile de l'aérogénérateur de sorte à générer un signal mesuré temporel.

Le procédé intègre également une étape d'amélioration de la qualité du signal mesuré temporel. Cette étape permet de compléter le signal mesuré temporel par un nombre limité de valeur nulle, comme cela est représenté sur la figure 2.

A titre d'exemple, selon un mode de mise en oeuvre, on augmente la taille d'un facteur k au moins égal au nombre d'harmonique pris en compte H, par exemple égal à 6.

On définit un vecteur $m[n]$ de taille N unitaire multiplié par la valeur moyenne $x_1[n]$.

Le signal dont la qualité a été améliorée peut être représenté par un vecteur $x_2$ de taille N'=kN tel que :

$$x_2[n] = \big[(x_1[n] - m[n]).w[n], Z[n], Z[n], Z[n], Z[n], Z[n]\big]$$

avec $w[n]$, une fenêtre de pondération classique et $Z[n]$, un vecteur nul de taille $N$.

Dans le cadre de cet exemple, le vecteur $x_2[n]$ est donc 6 fois plus grand que le vecteur $x_1[n]$. Ce vecteur est donc d'une taille N'=6N.

Cette étape d'amélioration peut également correspondre à une étape d'interpolation du spectre de façon à augmenter la résolution fréquentielle par un facteur correspondant à un nombre inférieur au nombre de multiples de la fréquence donnée. Cette étape d'interpolation est réalisée par ajout de valeurs correspondant à une valeur moyenne à l'extrémité du signal mesuré temporel pour l'ensemble de valeur de façon à augmenter la longueur du signal mesuré temporel par un produit du signal temporel mesuré avec le nombre inférieur au nombre de multiples de la fréquence donnée.

Une fois ces étapes éventuellement réalisées, comme l'illustre la figure 3, le signal mesuré temporel est transformé de sorte à générer un signal fréquentiel présentant un premier spectre en fonction de la fréquence H. Plus précisément, le signal fréquentiel est généré en appliquant au signal mesuré temporel une transformée de Fourier pour des simplicités de calcul.

Selon un exemple, par le moyen d'une simple transformée de Fourier rapide fft, ou éventuellement d'un traitement plus complexe, tel que l'analyse par enveloppe ou plus généralement toute approche cyclo-stationnaire.

$$X_2[n] = fft(x_2[n]).$$

En appelant df la résolution du spectre obtenu, df peut être défini par :

- $df = fs / N'$ dans le cas d'un échantillonnage temporel

- $df = R / N'$ dans le cas d'un échantillonnage angulaire

De plus, toujours dans une optique d'épurement du signal, des valeurs du spectre, correspondant à des fréquences parasites, sont remplacées par une valeur de lissage : valeur minimale du spectre ou valeur nulle. Ceci permet de conserver seulement les harmoniques nécessaires à la détection de la défaillance de l'état de l'élément mobile de l'aérogénérateur.

Il est possible de déterminer les composantes gênantes par une analyse de la cinématique du système, notamment des engrènements, en considérant les harmoniques, puis de remplacer dans le spectre toute les composantes gênantes du spectre par des valeurs nulles ou par la valeur minimale du spectre. On obtient ainsi un spectre $X_3[n]$ à partir du spectre $X_2[n]$.

Alternativement, le nettoyage du spectre peut être réalisé par un moyennage synchrone.

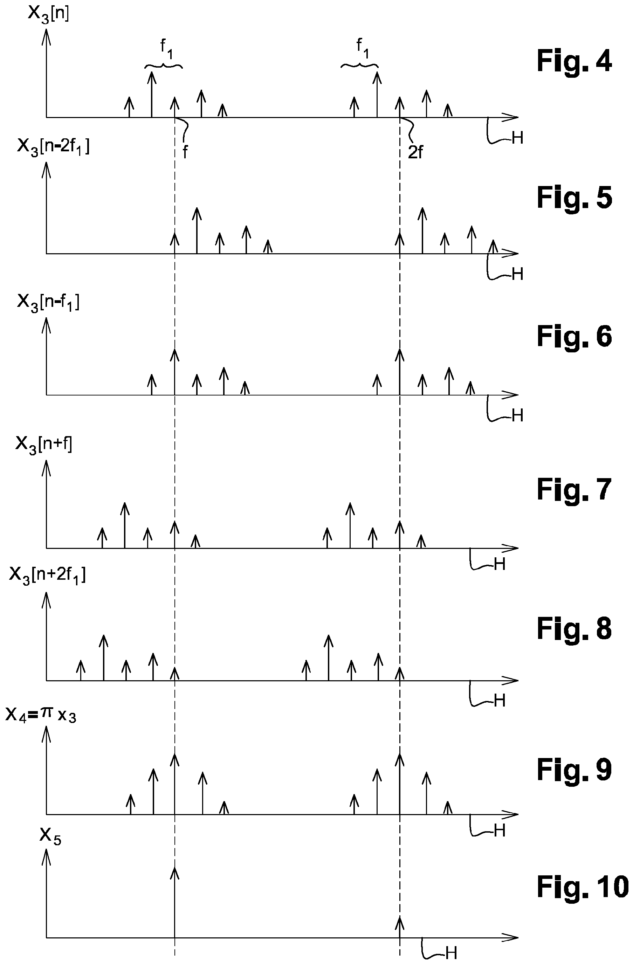

Comme représenté sur les figures 5 à 9, il est ensuite réalisé une étape de décalage fréquentiel de $f_1$ résultant en un spectre $X_4[n]$ dont la valeur pour la fréquence donnée $f$ correspond au produit de la valeur du premier spectre et d'un ensemble de valeurs du premier spectre correspondant à la somme de la fréquence donnée et d'un multiple de la fréquence caractéristique de l'élément mobile de l'aérogénérateur.

Ainsi, dans le cadre de l'exemple précédemment cité, un spectre $X_4$ est obtenu. Pour obtenir un tel spectre, on liste les fréquences $f_i$ d'arbre susceptibles de moduler le signal. Pour chacune d'elle, on crée un spectre produit des spectres décalés (paramètre "M"). Le paramètre M correspond au nombre de modulations supérieures et inférieures qui sont prises en compte. Ainsi on obtient :

$$X4, i[n] = X3[n] * prod\_m(X3[n + m * fi \,/\, df] * X3[n - m *$$
$$fi \,/\, df], \text{m allant de 1 à M})$$

Ensuite, pour une fréquence donnée, et plus précisément pour la fréquence de l'élément mobile de l'aérogénérateur, il est calculé un spectre transformé dont la valeur pour cette fréquence donnée correspond au produit de la valeur du premier spectre et d'un ensemble de valeurs du premier spectre correspondant à des H multiples de la fréquence donnée. Ce nombre de H-1 multiples de la fréquence donnée est défini par le nombre de H multiples de la fréquence donnée moins un.

Ainsi, dans le cadre de l'exemple précédemment cité, chaque spectre est transformé en un spectre $X_{5,i}$ par la technique décrite ci-dessus :

$$X5, i[n] = prod\_h\,(\,X4, i[n * h]\,, h \; allant \; de \; 1 \; \grave{a} \; H)$$

Sur la base du spectre obtenu, il est possible de vérifier la réalisation d'un critère de détection, représenté à la figure 10, pour des valeurs du spectre transformé dans un intervalle fréquentiel à proximité d'une valeur caractéristique d'un défaut de sorte à détecter l'état de l'élément mobile de l'aérogénérateur lorsque l'élément mobile de l'aérogénérateur est défaillant. Le critère de détection détecte la défaillance qui se manifeste par une vibration de faible énergie correspondant à un pic dans au moins un intervalle surveillé.

La vérification du critère de détection peut consister par exemple à la vérification du dépassement d'un seuil d'amplitude dans l'intervalle surveillé.

Le ou les indicateur I décrits en référence à la figure 11 mentionnés précédemment peuvent correspondre notamment à une amplitude maximum atteinte par le spectre X5 sur un intervalle surveillé. Plusieurs intervalles peuvent être surveillés sur un même signal X5: un indicateur retiendra l'amplitude max de chacun d'eux, respectivement.

Ainsi, grâce aux dispositions décrites ci-dessus, une transformation est mise en oeuvre qui vise à transformer un spectre pour valoriser spécifiquement les familles d'harmoniques dont les éléments sont strictement les multiples entiers d'une "fréquence fondamentale".

L'application de cette transformation permet de supprimer les composantes qui ne font pas partie d'une famille d'harmonique nous évite d'hésiter entre une "composante fantôme" et une composante représentative de la défaillance.

Le procédé permet d'adapter cette technique :

- à un phénomène fréquentiel très régulier, ce qui est le cas des observations "angulaires" (i.e. à pas d'angle constant), indispensables pour surveiller ce genre de phénomène ; en effet, cette technique combine l'énergie contenue dans plusieurs harmoniques d'une même fréquence. La possibilité d'utiliser des harmoniques de la fondamentale repose sur l'hypothèse que le phénomène observé soit très régulier ;

- à un phénomène modulé par un peigne de raies grâce à l'étape de décalage du spectre.

Ces dispositions sont notamment utiles par exemple dans le cas des fréquences caractéristiques de bague interne: suivre un défaut de bague interne revient à suivre les multiples des fréquences caractéristiques augmentées ou réduites de la fréquence caractéristique de l'arbre porteur du roulement.

**Revendications**

1. Procédé de détection de la défaillance d'un élément mobile d'un aérogénérateur, le procédé de détection comprend les étapes suivantes :

   - mesure d'une grandeur physique représentative du mouvement de l'élément mobile de l'aérogénérateur de sorte à générer un signal mesuré temporel ($x_1$) ;
   - transformation du signal mesuré temporel ($x_1$) ou d'un signal temporel ($x_2$) obtenu à partir du signal mesuré temporel ($x_1$) de sorte à générer un signal fréquentiel présentant un premier spectre ($X_2$) ;
   - calcul d'un spectre transformé ($X_5$) dont la valeur pour une fréquence donnée correspond au produit de la valeur du premier spectre ($X_2$) ou d'un spectre ($X_3$, $X_4$) obtenu à partir du premier spectre ($X_2$) et d'un ensemble de valeurs du premier ($X_2$) ou du spectre ($X_3$, $X_4$) obtenu à partir du premier spectre ($X_2$) correspondant à des multiples de la fréquence donnée.
   - vérification de la réalisation d'un critère de détection pour des valeurs du spectre transformé dans un intervalle fréquentiel à proximité d'une valeur caractéristique d'un défaut.

2. Procédé de détection selon la revendication 1, dans lequel l'étape de calcul d'un spectre transformé prend en compte un nombre de multiples (H) de la fréquence donnée correspondant à un nombre d'harmoniques d'une fréquence caractéristique du défaut à détecter.

3. Procédé de détection selon l'une quelconque des revendication 1 ou 2, lequel comprend une étape de décalage fréquentiel résultant en un spectre ($X_4$) dont la valeur pour une fréquence donnée correspond au produit de la valeur du premier spectre ($X_2$) ou d'un spectre ($X_3$) obtenu à partir du premier spectre ($X_2$) et d'un ensemble de valeurs du premier spectre ($X_2$) ou d'un spectre ($X_3$) obtenu à partir du premier spectre ($X_2$) correspondant à la somme de la fréquence donnée et d'un multiple de la fréquence caractéristique de l'élément mobile de l'aérogénérateur.

4. Procédé de détection l'une quelconque des revendications 1 à 3, dans lequel le signal fréquentiel est généré en appliquant au signal mesuré temporel ($x_1$) une transformée de fourrier.

5. Procédé de détection selon l'une quelconque des revendications précédentes comprenant une étape d'amélioration de la qualité du signal mesuré temporel ($x_1$) de façon à augmenter la résolution fréquentielle par un facteur (k) au moins égal au nombre de multiples (H).

6. Procédé de détection selon la revendication 5, dans lequel l'étape d'amélioration comprend une étape d'interpolation du spectre.

7. Procédé de détection selon la revendication 6, dans lequel l'étape d'interpolation est réalisée par ajout de valeurs correspondant à une valeur nulle ou à une valeur moyenne à l'extrémité du signal mesuré temporel ($x_1$) pour l'ensemble de valeurs de façon à multiplier la longueur du signal mesuré temporel par le facteur (k) au moins égal au nombre de multiples (H).

8. Procédé de détection selon l'une quelconque des revendications précédentes comprenant une étape de nettoyage du spectre dans lequel au moins une valeur du spectre correspondant à au moins une fréquence parasite est remplacée par une valeur de lissage.

9. Procédé de détection selon la revendication précédente, dans lequel la valeur de lissage correspond à la valeur minimale du spectre ou à une valeur nulle.

10. Procédé de détection selon la revendication précédente, dans lequel l'étape de nettoyage du spectre est réalisée préalablement à l'étape de décalage fréquentiel.

**Patentansprüche**

1.  Verfahren zum Erkennen des Ausfalls eines beweglichen Elements einer Windkraftanlage, wobei das Erkennungsverfahren die folgenden Schritte umfasst:

    - Messen einer physikalischen Größe, die für die Bewegung des beweglichen Elements der Windkraftanlage repräsentativ ist, um ein gemessenes Zeitsignal ($x_1$) zu erzeugen;
    - Transformieren des gemessenen Zeitsignals ($x_1$) oder eines anhand des gemessenen Zeitsignals ($x_1$) erhaltenen Zeitsignals ($x_2$), um ein Frequenzsignal zu erzeugen, das ein erstes Spektrum ($X_2$) aufweist;
    - Berechnen eines transformierten Spektrums ($X_5$), dessen Wert für eine gegebene Frequenz dem Produkt aus dem Wert des ersten Spektrums ($X_2$) oder eines anhand des ersten Spektrums ($X_2$) erhaltenen Spektrums ($X_3$, $X_4$) und einem Satz von Werten des ersten ($X_2$) oder des anhand des ersten Spektrums ($X_2$) erhaltenen Spektrums ($X_3$, $X_4$) entspricht, die Vielfachen der gegebenen Frequenz entsprechen,
    - Überprüfen der Erfüllung eines Erkennungskriteriums für Werte des transformierten Spektrums in einem Frequenzintervall in der Nähe eines Werts, der für eine Störung charakteristisch ist.

2.  Erkennungsverfahren nach Anspruch 1, wobei der Schritt des Berechnens eines transformierten Spektrums eine Anzahl von Vielfachen (H) der gegebenen Frequenz berücksichtigt, die einer Anzahl von Harmonischen einer Frequenz, welche für die zu erkennende Störung charakteristisch ist, entspricht.

3.  Erkennungsverfahren nach einem der Ansprüche 1 oder 2, das einen Schritt der Frequenzverschiebung umfasst, der zu einem Spektrum ($X_4$) führt, dessen Wert für eine gegebene Frequenz dem Produkt aus dem Wert des ersten Spektrums ($X_2$) oder eines anhand des ersten Spektrums ($X_2$) erhaltenen Spektrums ($X_3$) und einem Satz von Werten des ersten Spektrums ($X_2$) oder eines anhand des ersten Spektrums ($X_2$) erhaltenen Spektrums ($X_3$) entspricht, welcher der Summe aus der gegebenen Frequenz und einem Vielfachen der Frequenz, die für das bewegliche Element der Windkraftanlage charakteristisch ist, entspricht.

4.  Erkennungsverfahren nach einem der Ansprüche 1 bis 3, wobei das Frequenzsignal erzeugt wird, indem auf das gemessene Zeitsignal ($x_1$) eine Fourier-Transformation angewendet wird.

5.  Erkennungsverfahren nach einem der vorstehenden Ansprüche, das einen Schritt des Verbesserns der Qualität des gemessenen Zeitsignals ($x_1$) umfasst, um die Frequenzauflösung um einen Faktor (k), der mindestens gleich der Anzahl von Vielfachen (H) ist, zu erhöhen.

6.  Erkennungsverfahren nach Anspruch 5, wobei der Schritt des Verbesserns einen Schritt des Interpolierens des Spektrums umfasst.

7.  Erkennungsverfahren nach Anspruch 6, wobei der Schritt des Interpolierens durch Hinzufügen von Werten ausgeführt wird, die einem Wert Null oder einem Mittelwert am Ende des gemessenen Zeitsignals ($x_1$) für den Satz von Werten entsprechen, um die Länge des gemessenen Zeitsignals mit dem Faktor (k), der mindestens gleich der Anzahl von Vielfachen (H) ist, zu multiplizieren.

8.  Erkennungsverfahren nach einem der vorstehenden Ansprüche, das einen Schritt des Bereinigens des Spektrums umfasst, bei dem mindestens ein Wert des Spektrums, der mindestens einer Störfrequenz entspricht, durch einen Glättungswert ersetzt wird.

9.  Erkennungsverfahren nach dem vorstehenden Anspruch, wobei der Glättungswert dem Minimalwert des Spektrums oder einem Wert Null entspricht.

10. Erkennungsverfahren nach dem vorstehenden Anspruch, wobei der Schritt des Bereinigens des Spektrums vor dem Schritt der Frequenzverschiebung ausgeführt wird.

**Claims**

1. A method for detecting the failure of a movable element of an aerogenerator, the detection method comprises the following steps:

   - measuring a physical quantity representative of the movement of the movable element of the aerogenerator so as to generate a measured temporal signal ($x_1$);
   - transforming the measured temporal signal ($x_1$) or a temporal signal ($x_2$) obtained from the measured temporal signal ($x_1$) so as to generate a frequency signal having a first spectrum ($X_2$);
   - calculating a transformed spectrum ($X_5$) whose value for a given frequency corresponds to the product of the value of the first spectrum ($X_2$) or of a spectrum ($X_3$, $X_4$) obtained from the first spectrum ($X_2$) and a set of values of the first ($X_2$) or the spectrum ($X_3$, $X_4$) obtained from the first spectrum ($X_2$) corresponding to multiples of the given frequency.
   - verifying the fulfillment of a detection criterion for values of the transformed spectrum in a frequency interval close to a characteristic value of a defect.

2. The detection method according to claim 1, wherein the step of calculating a transformed spectrum takes into account a number of multiples (H) of the given frequency corresponding to a number of harmonics of a characteristic frequency of the defect to detect.

3. The detection method according to any one of claims 1 or 2, which comprises a frequency shift step resulting in a spectrum ($X_4$) whose value for a given frequency corresponds to the product of the value of the first spectrum ($X_2$) or a spectrum ($X_3$) obtained from the first spectrum ($X_2$) and a set of values of the first spectrum ($X_2$) or a spectrum ($X_3$) obtained from the first spectrum ($X_2$) corresponding to the sum of the given frequency and a multiple of the characteristic frequency of the movable element of the aerogenerator.

4. The detection method according to any one of claims 1 to 3, wherein the frequency signal is generated by applying to the measured time signal ($x_1$) a Fourier transform.

5. The detection method according to any one of the preceding claims comprising a step of improving the quality of the measured temporal signal ($x_1$) so as to increase the frequency resolution by a factor (k) at least equal to the number of multiples (H).

6. The detection method according to claim 5, wherein the improvement step comprises a step of interpolating the spectrum.

7. The detection method according to claim 6, wherein the interpolation step is carried out by adding values corresponding to a zero value or to an average value at the end of the temporal measured signal ($x_1$) for the set of values so as to multiply the length of the temporal measured signal by the factor (k) at least equal to the number of multiples (H).

8. The detection method according to any one of the preceding claims comprising a step of cleaning the spectrum in which at least one value of the spectrum corresponding to at least one parasitic frequency is replaced by a smoothing value.

9. The detection method according to the preceding claim, wherein the smoothing value corresponds to the minimum value of the spectrum or to a zero value.

10. The detection method according to the preceding claim, wherein the spectrum cleaning step is performed prior to the frequency shift step.

$x_1$

$T$

**Fig. 1**

$x_2$

$N$ (h–1) · N

**Fig. 2**

$X_2$

BPFO

$H$

**Fig. 3**

$X_3[n]$

$f_1$  $f_1$

**Fig. 4**

$f$  $2f$

$X_3[n-2f_1]$

**Fig. 5**

$X_3[n-f_1]$

**Fig. 6**

$X_3[n+f]$

**Fig. 7**

$X_3[n+2f_1]$

**Fig. 8**

$X_4 = \pi\, x_3$

**Fig. 9**

$X_5$

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1612458 A2